(19) Europäisches Patentamt / European Patent Office / Office européen des brevets

(11) **EP 1 873 513 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
*G01N 21/39* (2006.01)    *G01N 21/35* (2014.01)
*G01J 3/433* (2006.01)    *G01L 11/02* (2006.01)

(21) Anmeldenummer: **07111225.4**

(22) Anmeldetag: **28.06.2007**

(54) **Gasanalyse mit Laser-Spektroskopie**

Gas analysis with laser spectroscopy

Analyse de gaz à spectroscopie laser

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.06.2006 DE 102006030296**

(43) Veröffentlichungstag der Anmeldung:
**02.01.2008 Patentblatt 2008/01**

(73) Patentinhaber: **Siemens Aktiengesellschaft**
**80333 München (DE)**

(72) Erfinder:
• **Chen, Jia**
**81541, München (DE)**
• **Hennig, Oliver Dr.**
**81543, München (DE)**
• **Strzoda, Rainer**
**81825, München (DE)**

(56) Entgegenhaltungen:
**DE-A1- 10 238 356    DE-A1- 19 840 345**
**US-B1- 6 356 350**

EP 1 873 513 B1

**Beschreibung**

Die Erfindung betrifft ein Verfahren und eine Vorrichtung zur Gasanalyse auf der Grundlage einer Laserspektroskopie, insbesondere einer Wellenlängenmodulations-Spektrometrie, speziell zur Bestimmung einer Gaskonzentration und / oder eines Drucks.

Anhand der lasergestützten Wellenlängenmodulations-Spektrometrie ("Wavelength Modulation Spectrometry"; WMS) kann man Zustandsparameter eines Gases, wie die Konzentration und / oder den Druck, welcher in der Messumgebung existiert, bestimmen. Dabei wird durch eine Modulation des Laserstroms die Wellenlänge des Lasersignals zeitlich durchgestimmt. Dadurch, dass ein kleines Sinussignal, typischerweise im kHz Bereich, auf einen rampenförmiges Laserstrom-Signal aufmoduliert wird (Kleinsignalmodulation), treten beim Empfangssignal Frequenzanteile bei Mehrfachen der Modulationsfrequenz auf. Mit einem Phasengleichrichter bzw. Lock-In-Verstärker filtert man den Anteil der Modulationsfrequenz ("1F") und der doppelten Modulationsfrequenz ("2F") des zeitlichen Signals mit möglichst kleiner Bandbreite (z.B. 10 Hz) heraus, so dass das Signal-zu-Rausch-Verhältnis möglichst groß ist. Die sich ergebende spektral aufgelöste 2F-Absorptionskurve ist von drei Hauptparametern abhängig: Temperatur, Druck und Gaskonzentration. Wenn die Temperatur bekannt ist, kann man aus den Messdaten der 2F-Absorptionskurve die Konzentration und den Druck bestimmen.

Die Parameterbestimmung kann bisher auf verschiedenen Arten durchgeführt werden:

Bei einem bekannten Verfahren wird zunächst eine exakte Berechnung des 2F-Absorptionsspektrums unter einem bekannten Satz von Parametern durchgeführt, was einen hohen Rechenaufwand bedeutet, da jeder Punkt des Spektrums mit Hilfe einer Fourier-Transformation berechnet werden muss. Es folgt eine mehrdimensionale Anpassung des berechneten, theoretischen Spektrums an das gemessene Spektrum durch Variation der gesuchten Parameter (z.B. Gaskonzentration, Druck, Modulationsamplitude) mit einem mehrdimensionalen "Least Square Fit" (Methode der kleinsten Quadrate)-Algorithmus, wie beispielsweise in Applied Optics, Vol. 32, No. 30 (1993), p. 6090-6103, Louis C. Philippe, Ronald K. Hanson, "Laser diode wavelength-modulation spectroscopy for simultaneous measurement of temperature, pressure, and velocity in shock-heated oxygen flows" beschrieben.

Heutzutage liegen relativ einfache Formeln vor, mit denen das 2F-Spektrum ohne Fourier-Transformation näherungsweise berechnet werden kann, was den Rechenaufwand erheblich reduziert. Allerdings bleibt auch hier die Notwendigkeit bestehen, eine mehrdimensionale Anpassungsprozedur zur Bestimmung der Gaskonzentration durchzuführen, wie z. B. in Journal of Quantitative Spectroscopy & Radiative Transfer 68 (2001), p. 299-317, Ove Axner, Pawel Kluczynski, Asa M. Lindberg, "A general non-complex analytical expression for the nth Fourier component of a wavelength-modulated Lorentzian lineshape function" beschrieben.

Wenn einzelne Parameter nicht stark variieren oder die Anforderung an die Messgenauigkeit nicht hoch ist, kann man statt einer Berechnung des Spektrums ein unter bekannten Bedingungen gemessenes 2F-Spektrum als Referenz verwenden und dieses so skalieren, dass es mit der Messkurve am besten übereinstimmt, wie z. B. in Diode Lasers and Applications, Proceedings of SPIE, Vol. 4817 (2002), p. 73-81, Bomse et al.: "Early fire sensing using near IR-diode laser spectroscopy" beschrieben. Damit entfällt aber die Möglichkeit, Änderungen der Randbedingungen (Druck, Temperatur) zu berücksichtigen.

Ein weiteres laserdioden-gestütztes Verfahren zur selektiven Gasdetektion ist in DE 197 17 145 C2 offenbart.

DE 198 40 345 A1 offenbart ein Verfahren zur Bestimmung einer Konzentration eines Gases entsprechend des Oberbegriffs von Anspruch 1.

Es ist daher die Aufgabe der vorliegenden Erfindung, eine Möglichkeit zur Gasanalyse auf der Grundlage der Wellenlängenmodulations-Spektrometrie mit vermindertem Auswertungsaufwand bereitzustellen, und im Besonderen eine solche Möglichkeit zur Bestimmung einer Gaskonzentration und / oder eines Drucks, und zwar auch unter Berücksichtigung von variablen Randbedingungen.

Dieses Verfahren nutzt aus, dass die 2F-Absorptionskurve durch zwei charakteristische Größen bestimmbar ist, nämlich das 'Oben-zu-Unten-Verhältnis' (OZU) und die Y-Skalierung, wie weiter unten ausgeführt wird. Das Oben-zu-Unten-Verhältnis symbolisiert die Kurvenform, welche durch den Druck P, die Modulationsamplitude mA, die Temperatur T und die X-Skalierung beeinflusst wird. Die Konzentration c eines Gases hat keinen Einfluss auf die Kurvenform. Die Y-Skalierung wird durch die Konzentration c und die Temperatur T beeinflusst, daher ist die 2F-Absorptionskurve linear von der Konzentration c abhängig. Eine Kurvenanpassung lässt sich unter Verwendung dieser charakteristischen Größen zu einer eindimensionalen Schätzung vereinfachen. Zur Bestimmung der Gaskonzentration muss nur die Kurvenform, entsprechend einer Variation des OZU-Verhältnisses, variiert werden, was beispielsweise mit den bekannten vereinfachten Verfahren geschehen kann.

Zu einer festgelegten Kurvenform kann die Y-Skalierung optimal mit einem vergleichsweise einfachen Least-Square-Schätzer bestimmt werden. Die Y-Skalierung braucht somit nicht selbst variiert werden. Die Kurvenform und die sich ergebende Y-Skalierung formen eine Referenzkurve. Die quadratische Abweichung zwischen der Referenzkurve und der Messkurve wird dann als das zu minimierende Anpassungskriterium ("Fitness" bzw. Güte) definiert.

Die Aufgabe wird somit unter einem Gesichtspunkt der Erfindung gelöst durch ein Verfahren zur Bestimmung einer Konzentration eines Gases nach der Wellenlängenmodulations-Spektrometrie, welches die folgenden Schritte umfasst:

a) Aufnehmen einer 2F-Absorptionsmesskurve einer Absorptionslinie des Gases

b) Berechnen einer zu der 2F-Absorptionsmesskurve passenden Kurvenform einer Referenzkurve durch Festlegen eines geeigneten OZU-Verhältnisses

c) Anpassen der Referenzkurve an die 2F-Absorptionskurve durch Einstellen eines Y-Skalierungsfaktors

d) Bestimmen der Konzentration aus dem Y-Skalierungsfaktor der angepassten Referenzkurve.

Wie bereits beschrieben, kann der Y-Skalierungsfaktor besonders einfach abgeschätzt werden. Da zu einer Kurvenform (Oben-zu-Unten-Verhältnis) mehrere Paare von Modulationsamplitude und Druck gehören, kann man so beispielsweise auch mit einer angenommenen Modulationsamplitude und einem beliebigen Druck die richtige Kurvenform erzeugen und dann die richtige Konzentration berechnen. Man kann also ohne genaue Kenntnis des Drucks die Konzentration bestimmen.

Diese Grundidee, die Bestimmung von Gasparametern auf charakteristische Größen einer berechneten 2F-Referenzkurve zurückzuführen, ergibt die vereinfachten Beziehungen zwischen dem Druck und / oder der Konzentration des Gases und den Messwerten. Dadurch können die gewünschten Gasparameter vergleichsweise schnell und mit verringertem Aufwand bestimmt werden.

Es ist vorteilhaft, wenn die Referenzkurve eine auf eine vorbestimmte Konzentration (c) des Gases, beispielsweise auf eine Gaskonzentration von c = ca. 1 %, normierte 2F-Absorptionskurve ist.

Es ist insbesondere vorteilhaft, wenn das Einstellen des Y-Skalierungsfaktors mittels einer Least-Square-Abschätzung geschieht. Es kann aber auch günstig sein, wenn das Einstellen des Y-Skalierungsfaktors mittels einer Division eines Maximums des Messkurve durch ein Maximum der normierten Referenzkurve(z. B. bei c= 1%) geschieht.

Es ist auch vorteilhaft, wenn in Schritt d) das Bestimmen der Konzentration eine Temperaturkorrektur umfasst.

Zur Bestimmung eines Drucks des Gases ist es günstig, wenn das Verfahren weiterhin ein Bestimmen des Drucks aus dem OZU-Verhältnis umfasst, wie weiter unten genauer ausgeführt.

Es ist auch vorteilhaft, wenn in einem weiteren Schritt e) das Bestimmen des Drucks eine Druckkorrektur umfasst, bei der ein für die aktuelle Messung angenommener Druck mittels eines Druckkorrekturfaktors in den zu bestimmenden Druck umgerechnet wird. Dies gilt insbesondere, falls der Druckkorrekturfaktor mittels einer Eichung ermittelt wird.

Besonders bevorzugt wird es, wenn vor Schritt a) eine Abhängigkeit des Druckes vom OZU-Verhältnis und / oder der X-Skalierung vom Druck bestimmt wird und beispielsweise in einem Speicher eines Messgeräts, abgespeichert wird, insbesondere in Form einer Formel, speziell eines Polygons bzw. deren Parametern. Dabei braucht diese Bestimmung nicht vor jeder Durchführung des Verfahrens durchgeführt zu werden.

Es kann auch günstig sein, wenn vor jeder Durchführung des Verfahrens eine Bestimmung von Startwerten für das OZU-Verhältnis und / oder den Pseudo-Druck aus der gemessenen 2F-Absorptionsmesskurve durchgeführt wird.

Insbesondere ist es dann vorteilhaft, wenn die Bestimmung der Startwerte durchgeführt wird unter Verwendung von

a. Parabelanpassungen für die Bestimmung des Maximums und der Minima der 2F-Absorptionsmesskurve für die Nullstellen der 2F-Kurve und / oder durch

b. eine Bestimmung einer Autokorrelation mit der Referenzkurve

Es ist zur erhöhten Messgenauigkeit auch vorteilhaft, wenn vor Schritt a) eine Kalibrierung eines zur Durchführung des Verfahrens verwendeten Messsystems durchgeführt worden ist, wobei das Messsystem mit bekannten Gaskonzentrationen bei verschiedenen bekannten Temperaturen und Drücken betrieben wird.

Dies kann besonders günstig sein, wenn bei der Kalibrierung ein Eichfaktor zwischen der Y-Skalierung und der Gaskonzentration, eine X-Skalierung und ein Eichfaktor zwischen Pseudodruck und wahrem Druck bestimmt werden.

Auch ist es günstig, wenn ein Eichfaktor für den Druck aus dem Verhältnis zwischen angenommener Modulationsamplitude und wahrer Modulationsamplitude bestimmt wird.

Im Folgenden wird das Verfahren anhand möglicher konkreter Ausführungsschritte genauer dargestellt.

1. Analyse der Absorptionslinien

Zum besseren Verständnis werden zunächst die Variablen und ihre Einheiten in Tabelle 1 dargestellt.

| Konstante | Bedeutung | Wert | Einheit |
|---|---|---|---|
| $c_2$ | $\frac{hc}{k}$ | 1.4388 | cm K |
| $v_0$ | Linienmittel | 13091,710920 | $\frac{1}{cm}$ |
| $v$ | Wellenzahl | | $\frac{1}{cm}$ |
| E | Niedrigzustandsenergie | 130.43750 | $\frac{1}{cm}$ |
| I | Weglänge | 20 | cm |
| S (296) | Linienstärke bei Temperatur 296K | 8.365e-24 | $\frac{cm^{-1}}{molecule.cm^{-2}}$ |
| $\gamma_{air}$ | Luftverbreiterte Halbwertsbreite | 0.0498 | $\frac{cm^{-1}}{atm}$ |
| $\gamma_{self}$ | Selbstverbreiterte Halbwertsbreite | 0.0493 | $\frac{cm^{-1}}{atm}$ |
| $n_0$ | | $2.48 \cdot 10^{19}$ | $\frac{Teichen}{cm^3}$ |

| Variable | Bedeutung | Normalbedingung | Einheit |
|---|---|---|---|
| T | Temperatur | 296 | K |
| P | Druck | 1 | Bar |
| C | Konzentration | 21 (Luft) | % |
| $\lambda$ | Wellenlänge | | cm |

Die 2F-Absorptionslinie A(v) kann in Abhängigkeit von der Wellenzahl beschrieben werden als:

$$A(v) = \exp\left( -\frac{n_0}{\pi} \cdot \frac{296}{T} \cdot \frac{S \cdot l \cdot c}{a_L} \cdot P \cdot \frac{1}{1 + \left(\frac{v - v_0}{a_L}\right)^2} \right) \qquad (1)$$

Da $e^x \approx 1 + x$ gilt, wenn x sehr klein ist, d. h., die Absorption nicht groß bzw. die Gaskonzentration c klein ist, folgt

$$\approx 1 - \frac{n_o}{\pi} \cdot \frac{296}{T} \cdot \frac{S \cdot l \cdot c}{a_L} \cdot P \cdot \frac{1}{1 + \left(\frac{v - v_o}{a_L}\right)^2} \qquad (2)$$

mit der Linienstärke S und dem Druckverbreiterungskoeffizienten $a_L$ formelmäßig so dargestellt:

$$S = S(296) \frac{Q(296)}{Q(T)} \cdot \frac{\exp\left(\frac{-c_2 \cdot E}{T}\right)}{\exp\left(\frac{-c_2 \cdot E}{296}\right)} \cdot \underbrace{\frac{1 - \exp\left(\frac{-c_2 \cdot v_o}{T}\right)}{1 - \exp\left(\frac{-c_2 \cdot v_o}{296}\right)}}_{\approx 1} \qquad (3)$$

Da der letzte Term eine Korrektur für hohe Temperaturen ist, kann man ihn hier zu 1 setzen:

$$\approx S(296) \cdot \frac{Q(296)}{Q(T)} \cdot \exp\left( c_2 E\left(\frac{T - 296}{T \cdot 296}\right) \right) \qquad (4)$$

$$a_L = (\gamma_{air}(1-c) + \gamma_{self} \cdot c) \cdot P \cdot \left(\frac{296}{T}\right)^n \approx \gamma_{air} \cdot P \cdot \left(\frac{296}{T}\right)^n \qquad (5)$$

sowohl S als auch $a_L$ weisen Terme auf, die eine Funktion von T enthalten. Daher werden zwei Funktionen mit Variablen T definiert, die jeweils den Einfluss der Temperatur auf die Höhe oder Bereite der Kurve darstellt.

$$f_1(T) := \left(\frac{T}{296}\right)^{n-1} \cdot \frac{Q(296)}{Q(T)} \cdot exp\left(c_2 E\left(\frac{T-296}{T \cdot 296}\right)\right) \qquad (6)$$

$$f_2(T) := \left(\frac{296}{T}\right)^n$$

Fasst man die übrigen Konstanten auch zusammen, ergibt sich:

$$\beta = \frac{n_0}{\pi} \cdot \frac{S(296)}{\gamma_{air}} \qquad (7)$$

Unter der normalen Bedingung (296 K = 23°C) sind $f_1(T)$ und $f_2(T)$ gleich 1. Dann hat Temperatur keine Wirkung auf die Breite oder Höhe der Kurve. Man kann die Abweichung der Wellenlänge anstatt der Wellenzahl als Parameter einsetzen:

$$\Delta \nu = \nu - \nu_o = \frac{1}{\lambda} - \frac{1}{\lambda_0} \qquad (8)$$

$$= \frac{\Delta\lambda}{\lambda_0 \cdot (\lambda_0 - \Delta\lambda)} \approx \frac{\Delta\lambda}{\lambda_0^2} \qquad (9)$$

Um die Kurvenparameter herauszufinden, werden die Funktionen wie folgt vereinfacht:

$$A(\Delta\lambda) \approx 1 - \frac{k_1}{(\frac{\Delta\lambda}{k_2})^2 + 1} \qquad (10)$$

mit:

$$k_1 := \beta \cdot f_1(T) \cdot l \cdot c$$
$$\propto f_1(T) \cdot l \cdot c \qquad (11)$$
$$k_2 := \lambda_0^2 \cdot a_L = \lambda_0^2 \cdot \gamma_{air} \cdot f_2(T) \cdot P$$
$$\propto f_2(T) \cdot P$$

Die Kurvenhöhe ist proportional zu $k_1$, also zu der Konzentration, dem Temperaturkorrekturfaktor und der Weglänge, während die Kurvebreite proportional zu $k_2$, also dem Druck und dem Temperaturkorrekturfaktor ist. $k_2$ hat die gleiche Bedeutung wie $a_L$ (HWHM) und ist nur in Wellenlängen umgerechnet.

Mit mA ist die Modulationsamplitude der Wellenlänge bezeichnet mit der Einheit cm. Das Eingangsignal stellt sich wie folgt dar:

$$\Delta\lambda = \Delta\lambda_0 + mA \cdot \cos(z)\,\text{mit}: z = 2\pi f t \qquad\qquad (12)$$

Die Modulationsfrequenz f kann z. B. auf 6 KHz gesetzt werden. Die Absorptionsfunktion ist dann eine Funktion über die zwei Variablen $\Delta\lambda_0$ und z:

$$A(\Delta\lambda_0, z) \approx 1 - k_1 \cdot \frac{1}{\left(\frac{\Delta\lambda_0 + mA\cdot\cos(z)}{k_2}\right)^2 + 1} \qquad\qquad (13)$$

Aus dieser Formel kann Folgendes abgelesen werden:

a) Es ergibt sich eine gleiche Kurvenform, wobei die 2F-Signale dann auch gleich sind:

$$A(\Delta\lambda_{0,1}, z)\big|_{mA=mA_1, P=P_1} = A(\Delta\lambda_{0,2}, z)\big|_{mA=mA_2, P=P_2} \qquad\qquad (14)$$

Wenn die Modulationsamplitude, der Druck und der Abstand zwischen zwei Messpunkten bezüglich Wellenlänge proportional zueinander sind, gilt:

$$\frac{mA_1}{mA_2} = \frac{P_1}{P_2} = \frac{\Delta\lambda_{0,1}}{\Delta\lambda_{0,2}} \qquad\qquad (15)$$

Eine Skalierung von $\Delta\lambda_0$ ist eine Skalierung in X-Richtung, sowohl bei der Absorptionskurve als auch beim 2F-Signal. Ist die Modulationsamplitude mA nicht genau bekannt, kann man eine Modulationsamplitude annehmen. Eine Abweichung des Druckes kann diese Abweichung der Modulationsamplitude kompensieren. Es ergeben sich dann, bis auf eine X-Skalierung, gleiche Absorptionskurven, also auch gleiche 2F-Signale; d.h., die Kurve wird nur breiter oder schmaler. Man kann also durch Variation des Druckes und der X-Skalierung jede Kurvenform anpassen. Dieser Druck wird Pseudo-Druck genannt. Er ist proportional zum realen Druck. Der zugehörige Proportionalitätsfaktor wird Pseudofaktor genannt. Er gibt auch das Verhältnis von realer Modulationsamplitude zu der bei der Schätzung verwendeten Modulationsamplitude (MA_pseudo). Da auch die Auflösung (Wellenlängenabstand zwischen zwei Messpunkten) der Messkurve unbekannt ist, wird diese günstigerweise bei einer Eichung bestimmt werden. Weil ein Pseudofaktor ungleich 1 üblicherweise vorhanden ist, ist diese bei der Eichung bestimmte Auflösung eine 'Pseudo-Auflösung' bzw. 'Pseudo-X-Skalierung', d.h., sie gibt nicht den wirklichen Abstand der Punkte in Wellenlängen an, sondern ist nur proportional dazu, was aber bei der Schätzung der Konzentration c keine Rolle spielt.

Wenn die Auflösung schon durch Eichung angepasst ist, braucht man dann nur noch einen Parameter, nämlich den Druck, zu variieren, um zu verschiedenen Kurvenformen zu gelangen. Da die Modulationsamplitude als konstanter Wert angenommen wird, ist der Pseudofaktor konstant. Von daher muss man die Auflösung bzw. X-Skalierung nur einmal anpassen.

b) Die Temperaturfaktoren $f_1(T)$ und $f_2(T)$ kompensieren nur Konzentration und Druck. Man kann die Temperaturabhängigkeit zunächst vernachlässigen, und Druck und Konzentration bei einer festen Temperatur $T_0$ schätzen. Nach der Schätzung kann dann bei bekannter wirklicher Temperatur T der jeweilige Wert für c und p durch Multiplikation mit $f_1(T_0)/f_1(T)$ bzw. $f_2(T_0)/f_2(T)$ korrigiert werden. Deswegen braucht man die Referenzkurve nur für eine Temperatur und eine Modulationsamplitude abzuspeichern. Entsprechend braucht man auch für die Beziehung des Drucks und des Oben-zu-Unten-Verhältnisses nur eine Parabel zu speichern.

Charakteristische Größe der 2F-Kurve

Aus der theoretischen 2F-Kurve bzw. Referenzkurve kann man die Information von Konzentration und Druck extrahieren; dafür werden, wie bereits oben angemerkt, zwei charakteristische Größen benötigt:

- Oben-zu-Unten-Verhältnis (OZU): Das Verhältnis zwischen Maximum und Minimum der 2F-Kurve. Dies ist von der Form der Kurve abhängig und ist abhängig von der Temperatur T, dem Druck P und der Modulationsamplitude mA, aber unabhängig von Konzentration, also

$$\mathbf{ozu} = \frac{\text{Maximum der Kurve}}{\text{Minimum der Kurve}} = f(T, P, mA) \qquad (16)$$

Daher ist das OZU für zwei Kurven gleich, wenn $\frac{mA_1}{mA_2} = \frac{P_1}{P_2}$ ist. Da, wie vorher gesagt, T und mA zunächst konstant gelassen werden können, ist das OZU im Wesentlichen ein Maß für den (Pseudo-)Druck und umgekehrt. Da mA fest gesetzt ist, gibt es auch einen eindeutigen Zusammenhang zwischen OZU und den Abstand der zwei Minima wieder. Wenn man OZU variiert, kann man auch verschiedene Kurvenformen erzeugen.

- Höhe bzw. Y-Skalierung(H): Sie wird definiert als der Quotient des Signals und einer auf c = 1% normierten Kurve mit gleichem OZU bei fester Temperatur $T_0$. Sie ist abhängig von der Konzentration c und der wirklichen Temperatur T.

$$\mathbf{H} \propto c \cdot f_1(T) \qquad (17)$$

Wenn man die Kurve als Vektor betrachtet, dann entspricht OZU der Richtung des Vektors, H entspricht der Länge des Vektors. Für die gemessenen Kurven gibt es zusätzlich noch vier (unbekannte) Parameter:

- Kalibrierfaktor: Das Y-Achsen-Verhältnis zwischen der Messkurve und Referenzkurve mit gleichen Parametern, insbesondere gleicher Konzentration.

- X-Skalierung: Der Abstand zweier Punkte der Kurve in Wellenlängen.

- X-Offset: Die Position des Maximums der gemessenen Kurve. Die theoretische Kurve ist auf der Y-Achse symmetrisch.

- Y-Offset: Die Verschiebung der gemessenen Kurve auf der Y-Achse. Die theoretische Kurve ist mittelwertfrei.

Wenn man die Messkurve anpassen möchte, müssen diese vier Faktoren auch bekannt sein. Deswegen kann man zur genaueren Messung zuerst eine Eichung durchführen, in der diese Werte bestimmt werden.
Im Folgenden wird der Ablauf einer Ausführungsform des Verfahrens anhand von rein schematischen Figuren genauer beschrieben.

Figur 1    zeigt einen Messaufbau eines erfindungsgemäßen Verfahrens;

Figur 2    zeigt skizzenhaft ein Datenflussdiagramm einer Ausführungsform des erfindungsgemäßen Verfahrens;

Figur 3    zeigt einen Parameterzusammenhang zum erfindungsgemäßen Verfahren.

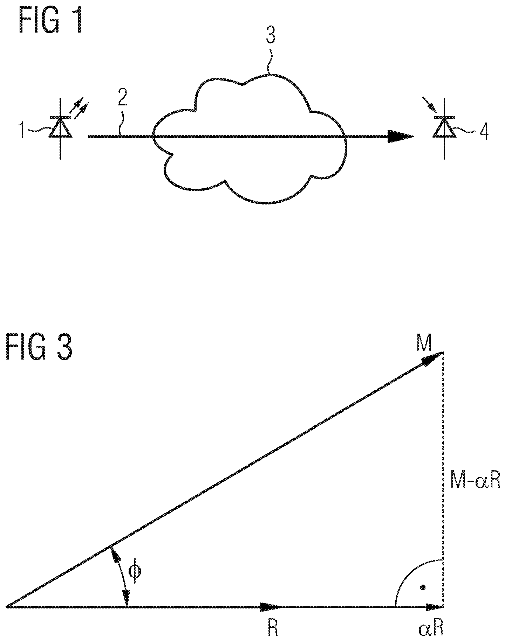

FIG 1 zeigt skizzenhaft einen Messaufbau zur Durchführung des erfindungsgemäßen Verfahrens mit einer wellenlängendurchstimmbaren Laserdiode 1, die einen Laserstrahl 2 durch ein Messgas 3 zu einem Laserdetektor 4 abstrahlt. Die Abtastung der 1F- und 2F-Absorptionskurven geschieht nach den bekannten Methoden.

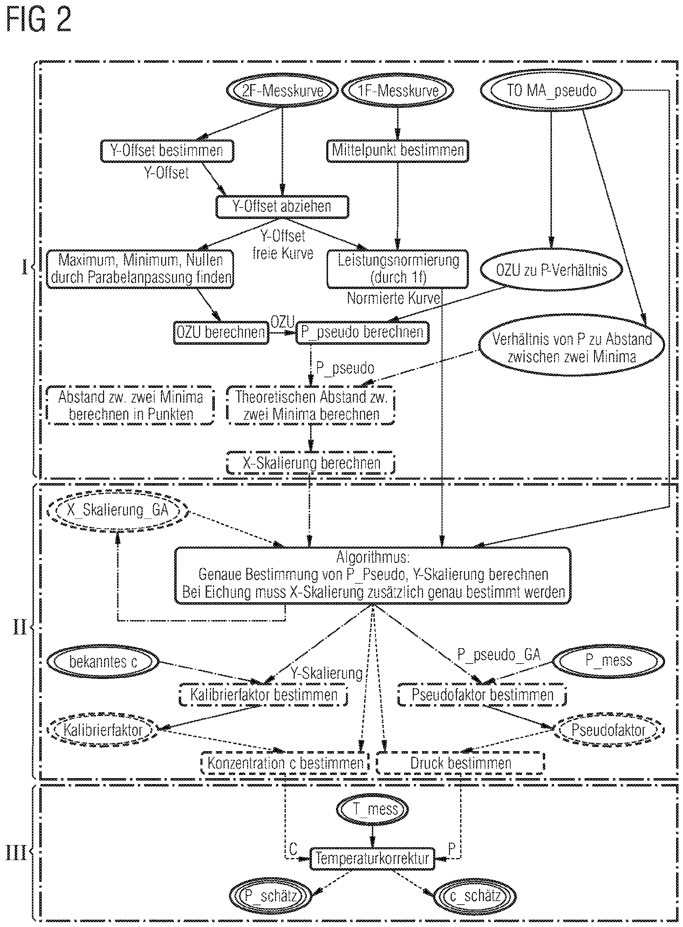

In FIG 2 wird eine Ausführungsform des erfindungsgemäßen Verfahrens in Form eines Datenflussdiagramms gezeigt. In den Kästen mit abgerundeten Ecken werden die Betriebsschritte beschrieben, durch die Pfeile fließen Daten. Die Ellipsen bezeichnen die Variablen bzw. Parameter/Konstanten. Die durchgezogenen doppelten Ellipsen bezeichnen Eingaben:

- Die Messpunkte für die 2F-Absorptionskurve ("2F-Messkurve");

- Die Messpunkte für die 1F-Absorptionskurve zur Leistungsnormierung ("1F-Messkurve");

- Die angenommene Modulationsamplitude mA_pseudo, diese entspricht nicht der realen Modulationsamplitude;

- Die Temperatur $T_0$ bei Normalbedingung; und

- Die gemessene Temperatur $T_{mess}$ ("T_mess").

Man kann für die Eichung eine Kurve verwenden, von der Konzentration und Druck bekannt sind, so dass der Pseudofaktor und der Kalibrierfaktor berechnet werden können. Pseudofaktor, Kalibrierfaktor und die Auflösung bzw. X-Skalierung sind die "Ausgaben" der Eichung (wie durch die gestrichelten doppelten Ellipsen dargestellt)und auch gleichzeitig die Eingaben für die Schätzung einer unbekannten Kurve.

Mit den gestrichpunkteten Linien werden die Operationen und die Schritte bezeichnet, die nur während der Eichung nötig sind, und mit gepunkteten Linien werden die Schritte für die Schätzung einer unbekannten Kurve bezeichnet.

Die dreifach umrandeten Ellipsen kennzeichnen die Ausgabe, nämlich den geschätzten Druck ("P_schätz") und die geschätzte Konzentration ("c_schätz").

Das Verfahren läuft insgesamt folgendermaßen ab:

1. Zunächst werden Vorberechnungen durchgeführt (Schritt I), nämlich:

- Y-Offset wird durch Mittelwertbildung der Messkurve geschätzt. Dieser wird dann von der Messkurve abgezogen, woraus man eine mittelwertfreie Messkurve erhält.

- Da die Empfangsleistung für jede Kurve nicht exakt die gleiche ist, wird man günstigerweise eine Leistungsnormierung durchführen. Für die Leistungsnormierung gilt: der Wert des mittleren Wendepunkts des 1F-Signals ist ein Maß für die Mittelwert der Sendeleistung. Daher kann man die vom Y-Offset befreite Kurve durch diesen Wert dividieren und so die Leistung normieren. Der Mittelpunkt des 1F-Signals wird günstigerweise mit einer Geraden approximiert.

- Das Maximum und die zwei Minima der Kurve werden durch Parabeln approximiert.

Durch Untersuchung der nötigen Punktanzahl der Parabelanpassung ergibt sich folgendes Ergebnis: Das Maximum wird mit 5 Punkten zu jeder Seite als Parabel 2. Ordnung imitiert. Die Minima werden mit 3 Punkten zu jeder Seite als Parabel 2. Ordnung imitiert.

Dies liefert sowohl eine genauere Schätzung für die Werte als auch für die Positionen der Minima bzw. des Maximums. Dadurch dass die Kurvenspitze analytisch durch eine Parabel berechnet werden kann, kann man die Position des Maximums bzw. Minimums der Parabel mit höherer Genauigkeit als auf einen Punkt bestimmen.

Die Nullstellen kann man für die Ermittelung der X-Skalierung bzw. Auflösung folgendermaßen bestimmen:

- Bei den Nullstellen wird zu jeder Seite mit 3 Punkten eine Geradenanpassung durchgeführt. Diese Möglichkeit wird in der Simulation gewählt, aber man kann auch in dem Programm die Möglichkeiten einfach umschalten.

- Auch wird das Integral des 2F-Signals gebildet und das Maximum und Minimum dieses Integrals durch eine Parabel imitiert.

Diese Positionen dieser Extrempunkte entsprechen den Positionen der zwei Nullstellen. Der Vorteil ist, dass das Rauschen durch die Integration gedämpft wird.

- Die 2F-Kurve verändert sich mit unterschiedlicher Differenz zum Linienmittel, von daher sollte sie symmetrisch auf der X-Achse liegen. Für die Berechnung des X-Offsets gibt es u. a. drei Möglichkeiten:

  - Durch die Position des Maximums der Kurve (mit Parabelapproximation);

  - durch den Mittelwert der Positionen der zwei imitierten minimalen Punkte; oder

  - durch den Mittelwert der Positionen der zwei imitierten Nullstellen.

- OZU ist bei der theoretischen 2F-Kurve definiert als der höchste Wert der Kurve dividiert durch den niedrigsten Wert der Kurve. Bei der Messkurve ist diese Berechnung häufig zu ungenau. Das Maximum und das Minimum können verrauscht sein. Aufgrund der Modulation sind die Minima der Kurve häufig auch unsymmetrisch.

Es werden hier zwei Methoden dargestellt, OZU zu berechnen:

- Division von Extrempunkten:

$$\textbf{ozu} = \frac{-2 \cdot \text{imitiertes Maximum}}{\text{imitiertes Minimum}_1 + \text{imitiertes Minimum}_2} \qquad (18)$$

- Skalarprodukt/Korrelation

Man kann auch berechnete normierte OZU-Referenzkurven speichern. Durch das Skalarprodukt testet man die Ähnlichkeit der Messkurve mit den normierten OZU-Referenzkurven, siehe FIG 3. Bei der Referenzkurve mit dem größten Skalarprodukt ergibt sich das OZU der Messkurve. Daraus berechnet man das Skalarprodukt, indem man jedes Element aus den Arrays multipliziert und addiert.

$$Skalarprodukt = \vec{M} \cdot \vec{R} = |\vec{M}| \cdot |\vec{R}| \cdot \cos(\phi) \qquad (19)$$

M: Vektor Messkurve
R: Vektor normierte Referenzkurve
$\phi$: der Winkel zwischen den zwei Vektoren

Da die Länge von $\vec{M}$ und die Länge von $\vec{R}$ immer konstant bleibt, ist $\phi$ die Güte des Skalarprodukts. D. h.: wenn $\phi$ groß ist, ist das Skalarprodukt klein, wenn $\phi$ klein ist, ist das Skalarprodukt groß. Ein kleines $\phi$ deutet an, dass die Kurven große Ähnlichkeit haben, d.h., der quadratische Fehler $|M - R|^2$ ist klein. Nachteiligerweise benötigt dieses Verfahren viel Aufwand bezüglich Speicher- und Rechenaufwand. Zusätzlich benötigt dieses Vorgehen auch die Information über X-Skalierung. Von daher kann man mit diesem Verfahren keine Eichung durchführen.

- Berechnung von p_pseudo

$$p\_pseudo = f(ozu, T_0, mA\_pseudo) \qquad (20)$$

Man kann unter konstantem MA_pseudo und $T_0$ den Zusammenhang zwischen OZU und P_pseudo berechnen und diesen in einer Interpolationsparabel von hoher Ordnung speichern. Der Speicheraufwand ist sehr gering, nämlich nur die Koeffizienten der Parabel. Hier hat die Parabel 11. Ordnung, um P pseudo aus OZU mit einem Fehler von maximal $1e^{-3}$ zu berechnen ($ozu = 0.6856...3.3157 \Rightarrow pseudo = 0.6...8$ bar)

- Berechnung der X-Skalierung
  Die X-Skalierung wird dadurch bestimmt, dass man den theoretischen Abstand der zwei Minima/Nullstellen nimmt, und die mit dem Abstand der zwei interpolierten Minima/Nullstellen der Messkurve vergleicht.

$$x\_skalierung = \frac{\text{Abst. der zwei Minima bzw. Nst. der Referenzkurve}}{\text{Abst. der zwei imitierten Minima bzw. Nst der Messkurve}} \qquad (21)$$

Unter der vordefinierten bzw. angenommenen Modulationsamplitude MA_pseudo und der konstanten Temperatur $T_0$ kann man das Verhältnis von P_pseudo und dem Abstand der zwei Minima/Nullstellen der theoretischen Kurve genau untersuchen und als Parabel approximieren. Die Koeffizienten der Parabel können dabei gespeichert werden. D.h., dass man aus dem geschätzten P_pseudo den theoretischen Abstand der zwei Minima / Nullstellen berechnen kann.

Berechnungsablauf (Schritt II)

Eichung

- In dem (Kern-)Algorithmus der Eichung werden P_pseudo und die X-Skalierung variiert.

Es werden Referenzkurven mit C = 1%, T = 23°C und mA_pseudo der jeweiligen X-Skalierung mit X-Offset und dem jeweiligen P_pseudo erzeugt. Die 2F-Referenzkurve kann mit Hilfe der Fast Fourier Transformation (FFT) oder einer vorhandenen Formel berechnet werden, kann aber auch durch Interpolation von gespeicherten "Referenzkurven" erzeugt werden, welche gemessen oder berechnet werden, also sozusagen "offline" erzeugt werden können. Man braucht bei dieser Variante also nur einmal einen hohen Aufwand für eine Berechnung zu treiben, um danach mehrmals darauf zurückgreifen zu können.

Der Algorithmus läuft folgendermaßen ab: Das Eingangssignal ist ($\delta\lambda_0$ + mA cos (z)), also ein sinusförmiges Signal um den Punkt $\delta\lambda_0$. Setzt man das Eingangssignal in die Formel der Absorptionslinie ein, erhält man ein Ausgangssignal. Dieses Ausgangssignal wird mit der FFT transformiert, und dann der Wert des Spektrums beim zweifachen der Grundfrequenz ausgelesen. Wenn man $\delta\lambda_0$ variiert und als x-Achse interpretiert, erhält man die 2F-Signalkurve.

• Dann werden der Y-Skalierfaktor $\alpha$ (Koeffizient der Messkurve Projektion und der Referenzkurve), und der Quadratische Fehler $|M - \alpha R|^2$ ausgerechnet. M ist der Vektor der Werte der Messkurve, R ist der Vektor der Werte der Referenzkurve. In FIG 3 wird das vektorielle Schätzprinzip anschaulich dargestellt.

Das P_pseudo und die X-Skalierung mit der größten Güte (der kleinste quadratische Fehler) werden vom z. B. genetischen Algorithmus als geschätztes Ergebnis ausgegeben. Die bestimmte X-Skalierung und der Kalibrierfaktor (aus Y-Skalierung und der bekannten Konzentration berechnet) werden später in der Messkurvenabschätzung als Konstanten benutzt. In diesem Sinne können also die X-Skalierung und der Kalibrierfaktor für ein bestimmtes Gerät voreingestellt werden, wobei vorteilhafterweise ab und zu die Werte aufgefrischt werden sollten.

Wenn man auch an einer Schätzung des Druckes interessiert ist, wird auch der Pseudofaktor bestimmt. Dieser ist das Verhältnis zwischen realem Druck und P_pseudo, und ist auch das Verhältnis zwischen der realen Modulationsamplitude und mA_pseudo.

Es gibt zwei Wege, den Faktor $\alpha$ zu bestimmen (den Y-Skalierfaktor zwischen Referenzkurve und anzupassender Messkurve) :

• Least-Squares-Schätzer (ideal: $\alpha$ so, dass $|M - \alpha R|^2$ minimal)

$$\alpha = \frac{\sum_i (Referenzkurve_i \cdot Messkurve_i)}{\sum_i (Referenzkurve_i \cdot Referenzkurve_i)} \qquad (22)$$

• Dividieren der zwei Werte der Maxima

$$\alpha = \frac{\text{Maximum Messkurve (mit Parabelimitation)}}{\text{Maximum der Referenzkurve}} \qquad (23)$$

Schätzung einer unbekannten Messkurve

• Zur Schätzung einer unbekannten Messkurve variiert man nur P_pseudo. Die Berechnung der Fitness/Güte (bzw. des quadratischen Fehlers) geht genauso wie bei der Eichung, außer dass die X-Skalierung nun fest auf dem durch die Eichung bestimmten Wert liegt.

• Die Y-Skalierung $\alpha$ dividiert durch Kalibierfaktor ergibt sich die Konzentration c (unter der Bedingung 23 Grad).

• P_pseudo wird mit dem Pseudofaktor korrigiert (unter der Bedingung 23 Grad).

Nachberechnung bzw. Temperaturkorrektur (Schritt III)

• Die Konzentration c bzw. der Kalibrierfaktor wird vorzugsweise mit $f_1(T)$ korrigiert. Dies kommt daher, dass in dem Algorithmus Referenzkurven mit der konstanten Temperatur 23° berechnet worden sind.

• Der Druck P wird mit $f_2(T)$ aus dem gleichen Grund korrigiert.

Ein großer Vorteil des oben beschriebenen Verfahrens ist, dass für die Kurvenanpassung nur eine einzige charakteristische Größe (P_pseudo) variiert werden muss, und zwar trotz mehrerer unbekannter Parameter. Dies bedeutet einen geringen Rechenaufwand, was auch die Implementierung über einen Mikrocontroller ermöglicht.

Das 'Oben-zu-Unten-Verhältnis' fasst mehrere unbekannte Parameter wie Modulationsamplitude, Druck und X-Skalierung zusammen. Man kann die richtige Konzentration bestimmen, wenn man die richtige Kurvenform gefunden hat, und zwar ohne den richtige Druck und Modulationsamplitude zu kennen. Wenn die anzupassende Kurve als Vektor angesehen wird, dann bezeichnet die Kurvenform 'Oben-zu-Unten Verhältnis' die Richtung des Vektors, während die Konzentration die Länge des Vektors bezeichnet (siehe FIG 3). Die Konzentration c braucht man nicht zu variieren, da die optimale Konzentration zu jeder Kurvenform berechnet werden kann, z. B. mit einem Least-Square-Schätzer. Da es bei der Schätzung der normalen Messkurve nur einen Parameter zu variieren gibt, kann man auch verschiedene Algorithmen benutzen. Das Verfahren ist nicht auf genetische Algorithmen eingeschränkt. Bei der Eichung braucht man nur zwei Parameter zu variieren.

**Patentansprüche**

1. Verfahren zur Bestimmung einer Konzentration (c) eines Gases nach der Wellenlängenmodulations-Spektrometrie, welches mindestens die folgenden Schritte umfasst:

   a) Aufnehmen einer 2F-Absorptionsmesskurve einer Absorptionslinie des Gases;
   b) Berechnen einer zu der 2F-Absorptionsmesskurve passenden Kurvenform einer Referenzkurve durch Wahl eines geeigneten Verhältnisses zwischen Maximum und Minimum der 2F-Absorptionskurve (OZU), **dadurch gekennzeichnet, dass** das Verfahren weiterhin folgende Schritte umfasst:
   c) Anpassen der Referenzkurve an die 2F-Absorptionskurve durch Einstellen eines Y-Skalierungsfaktors ($\alpha$); und
   d) Bestimmen der Konzentration (c) aus dem Y-Skalierungsfaktor ($\alpha$) der angepassten Referenzkurve.

2. Verfahren nach Anspruch 1, wobei die Referenzkurve eine auf eine vorbestimmte Konzentration (c) des Gases normierte 2F-Absorptionskurve ist, insbesondere auf eine Konzentration (c) von ca. 1 % normierte 2F-Absorptionskurve ist.

3. Verfahren nach Anspruch 1 oder 2, worin in Schritt c) das Einstellen des Y-Skalierungsfaktors ($\alpha$) mittels einer Least-Square-Abschätzung geschieht.

4. Verfahren nach Anspruch 1 oder 2, worin in Schritt c) das Einstellen des Y-Skalierungsfaktors ($\alpha$) mittels einer Division eines Maximums des Messkurve durch ein Maximum der normierten Referenzkurve geschieht.

5. Verfahren nach einem der vorangehenden Ansprüche, worin in Schritt d) das Bestimmen der Konzentration (c) eine Temperaturkorrektur umfasst.

6. Verfahren nach einem der vorhergehenden Ansprüche, wobei Verfahren weiterhin den folgenden Schritt umfasst:

   e) Bestimmen des Drucks aus dem Verhältnis zwischen Maximum und Minimum der 2F-Absorptionskurve (OZU).

7. Verfahren nach Anspruch 6, worin in Schritt e) das Bestimmen des Drucks (P) eine Druckkorrektur umfasst, bei der ein für die aktuelle Messung angenommener Druck (P_pseudo) mittels eines Druckkorrekturfaktors (Pseudofaktor) in den zu bestimmenden Druck (P, P_schätz) umgerechnet wird.

8. Verfahren nach Anspruch 7, worin der Druckkorrekturfaktor (Pseudofaktor) mittels einer Eichung ermittelt wird.

9. Verfahren nach einem der vorhergehenden Ansprüche, wobei vor Schritt a) eine Abhängigkeit des Druckes vom Verhältnis zwischen Maximum und Minimum der 2F-Absorptionskurve (OZU) und/oder der X-Skalierung vom Druck bestimmt wird und abgespeichert wird, insbesondere in Form einer Formel, insbesondere eines Polynoms.

10. Verfahren nach einem der vorhergehenden Ansprüche, wobei vor jeder Durchführung des Verfahrens eine Bestimmung von Startwerten für das Verhältnis zwischen Maximum und Minimum der 2F-Absorptionskurve (OZU) und / oder den Pseudo-Druck (P_pseudo) aus der gemessenen 2F-Absorptionsmesskurve durchgeführt wird.

**11.** Verfahren nach Anspruch 10, wobei die Bestimmung der Startwerte durchgeführt wird unter Verwendung von

    a. Parabelanpassungen für die Bestimmung des Maximums und der Minima der 2F-Absorptionsmesskurve für die Nullstellen der 2F-Kurve und/oder durch

    b. eine Bestimmung einer Autokorrelation mit der Referenzkurve

**12.** Verfahren nach einem der vorhergehenden Ansprüche, wobei vor Schritt a) eine Kalibrierung eines zur Durchführung des Verfahrens verwendeten Messsystems durchgeführt worden ist, wobei das Messsystem mit bekannten Gaskonzentrationen (c) bei verschiedenen bekannten Temperaturen (T) und Drucken (P) betrieben wird.

**13.** Verfahren nach Anspruch 12, wobei bei der Kalibrierung ein Eichfaktor zwischen der Y-Skalierung ($\alpha$) und der Gaskonzentration (c), eine X-Skalierung und ein Eichfaktor zwischen Pseudodruck (P_pseudo) und wahrem Druck (P) bestimmt wird.

**14.** Verfahren nach Anspruch 12, wobei ein Eichfaktor für den Druck aus dem Verhältnis zwischen angenommener Modulationsamplitude (mA_pseudo) und wahrer Modulationsamplitude (mA) bestimmt wird.

**Claims**

**1.** Method for determining a concentration (c) of a gas in accordance with the wavelength modulation spectrometry, which comprises at least the following steps:

    a) recording a 2F absorption measured curve of an absorption line of the gas;

    b) calculating a curve shape of a reference curve which matches the 2F absorption measured curve by selecting a suitable ratio between maximum and minimum of the 2F absorption curve (OZU),

**characterised in that** the method also comprises the following steps:

    c) adjusting the reference curve to the 2F absorption curve by setting a Y-scaling factor ($\alpha$); and

    d) determining the concentration (c) from the Y-scaling factor ($\alpha$) of the adjusted reference curve.

**2.** Method according to claim 1, wherein the reference curve is a 2F absorption curve standardized to a predetermined concentration (c) of the gas, in particular 2F absorption curve standardized to a concentration (c) of approx. 1%.

**3.** Method according to claim 1 or 2, wherein in step c) the Y-scaling factor ($\alpha$) is set by means of a Least Squares Estimation.

**4.** Method according to claim 1 or 2, wherein in step c), the Y-scaling factor ($\alpha$) is set by dividing a maximum of the measured curve by a maximum of the standardized reference curve.

**5.** Method according to one of the preceding claims, wherein in step d) the determination of the concentration (c) comprises a temperature correction.

**6.** Method according to one of the preceding claims, wherein the method further comprises the following step:

    e) determining the pressure from the ratio between the maximum and minimum of the 2F absorption curve (OZU).

**7.** Method according to claim 6, wherein in step e) the determination of the pressure (P) comprises a pressure correction, in which a pressure (P_pseudo) assumed for the current measurement is converted by means of a pressure correction factor (pseudo-factor) into the pressure (P, P_estimate) to be determined.

**8.** Method according to claim 7, wherein the pressure correction factor (pseudo-factor) is determined by means of a calibration.

**9.** Method according to one of the preceding claims, wherein prior to step a), a dependency of the pressure on the ratio between the maximum and minimum of the 2F absorption curve (OZU) and/or the X-scaling on the pressure is determined and saved, in particular in the form of a formula, in particular a polynomial.

**10.** Method according to one of the preceding claims, wherein prior to each implementation of the method, start values are determined for the ratio between the maximum and minimum of the 2F absorption curve (OZU) and/or the pseudo pressure (P_pseudo) from the measured 2F absorption measured curve.

**11.** Method according to claim 10, wherein the determination of the start values is performed using

a. Parable adjustments to determine the maximum and the minimum of the 2F absorption measured curve for the zero point of the 2F curve and/or by
b. a determination of an autocorrelation with the reference curve.

**12.** Method according to one of the preceding claims, wherein prior to step a), a calibration of a measurement system used to perform the method has been implemented, wherein the measurement system is operated with known gas concentrations (c) at various known temperatures (T) and pressures (P).

**13.** Method according to claim 12, wherein during calibration a calibration factor is determined between the Y-scaling ($\alpha$) and the gas concentration (c) and an X-scaling and a calibration factor between pseudo pressure (P_pseudo) and true pressure (P).

**14.** Method according to claim 12, wherein a calibration factor for the pressure is determined from the ratio between the assumed modulation amplitude (mA_pseudo) and the true modulation amplitude (mA).

**Revendications**

**1.** Procédé de détermination d'une concentration (c) d'un gaz par la spectrométrie de modulation en longueur d'onde, qui comprend au moins les stades suivant :

a) enregistrement d'une courbe de mesure d'absorption 2F d'une raie d'absorption du gaz ;
b) calcul d'une forme d'une courbe de référence s'adaptant à la courbe de mesure d'absorption 2F en choisissant une relation appropriée entre un maximum et un minimum de la courbe (OZU-) d'absorption 2F,

**caractérisé en ce que** le procédé comprend en outre les stades suivantes :

c) ajustement de la courbe de référence à la courbe d'absorption 2F par réglage d'un facteur ($\alpha$) de mise à l'échelle Y ; et
d) détermination de la concentration (c) à partir du facteur ($\alpha$) de mise à l'échelle Y de la courbe de référence ajustée.

**2.** Procédé suivant la revendication 1, dans lequel la courbe de référence est une courbe d'absorption 2F normée sur une concentration (c) définie à l'avance du gaz, notamment sur une concentration (c) d'une courbe d'absorption 2F normée à environ 1%.

**3.** Procédé suivant la revendication 1 ou 2, dans lequel, dans le stade (c), le réglage du facteur ($\alpha$) de mise à l'échelle Y a lieu au moyen d'une estimation suivant les moindres carrés.

**4.** Procédé suivant la revendication 1 ou 2, dans lequel, dans le stade c), le réglage du facteur ($\alpha$) de mise à l'échelle Y a lieu au moyen d'une division d'un maximum de la courbe de mesure par un maximum de la courbe de référence normée.

**5.** Procédé suivant l'une des revendications précédentes, dans lequel, dans le stade d), la détermination de la concentration (c) comprend une correction de température.

**6.** Procédé suivant l'une des revendications précédentes, dans lequel le procédé comprend en outre le stade suivant :

e) détermination de la pression à partir de la relation entre le maximum et le minimum de la courbe (OZU) d'absorption 2F.

**7.** Procédé suivant la revendication 6, dans lequel, dans le stade e), la détermination de la pression (P) comprend une correction de pression, dans laquelle une pression (P_pseudo) supposée pour la mesure en cours est recalculée au moyen d'un facteur (pseudofacteur) de correction de pression en la pression (P, P_schätz) à déterminer.

**8.** Procédé suivant la revendication 7, dans lequel on détermine le facteur (pseudofacteur) de correction de pression au moyen d'un étalonnage.

**9.** Procédé suivant l'une des revendications précédentes, dans lequel, avant le stade a), on détermine une variation de la pression en fonction de la relation entre le maximum et le minimum de la courbe (OZU) d'absorption 2F et/ou de la mise à l'échelle-X de la pression et on la mémorise, notamment sous la forme d'une formule, notamment d'un polynôme.

**10.** Procédé suivant l'une des revendications précédentes, dans lequel, chaque fois avant d'effectuer le procédé, on effectue une détermination de valeur de départ pour la relation entre le maximum et le minimum de la courbe (OZU) d'absorption 2F et/ou de la pression pseudo (P_pseudo) à partir de la courbe de mesure d'absorption 2F mesurée.

**11.** Procédé suivant la revendication 10, dans lequel on effectue la détermination des valeurs de départ en utilisant

   a. des ajustements paraboliques pour la détermination du maximum et du minimum de la courbe de mesure d'absorption 2F pour les points zéro, la courbe 2F et/ou
   b. une détermination d'une autocorrélation avec la courbe de référence.

**12.** Procédé suivant l'une des revendications précédentes, dans lequel, avant le stade a), il a été effectué un étalonnage d'un système de mesure utilisé pour effectuer le procédé, dans lequel le système de mesure fonctionne avec des concentrations (c) de gaz connus à des températures (T) et des pressions (P) connues différentes.

**13.** Procédé suivant la revendication 12, dans lequel, lors de l'étalonnage, on définit un facteur d'étalonnage entre la mise à l'échelle Y ($\alpha$) et la concentration (c) de gaz, une mise à l'échelle X et un facteur d'étalonnage entre la pseudo pression (P_pseudo) et la pression (P) vraie.

**14.** Procédé suivant la revendication 12, dans lequel on définit un facteur d'étalonnage pour la pression à partir de la relation entre l'amplitude (mA_pseudo) de modulation supposée et l'amplitude (mA) de modulation vraie.

FIG 1

FIG 3

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717145 C2

- DE 19840345 A1

**In der Beschreibung aufgeführte Nicht-Patentliteratur**

- **LOUIS C. PHILIPPE ; RONALD K. HANSON.** Laser diode wavelength-modulation spectroscopy for simultaneous measurement of temperature, pressure, and velocity in shock-heated oxygen flows. *Applied Optics,* 1993, vol. 32 (30), 6090-6103

- **OVE AXNER ; PAWEL KLUCZYNSKI ; ASA M. LINDBERG.** A general non-complex analytical expression for the nth Fourier component of a wavelength-modulated Lorentzian lineshape function. *Journal of Quantitative Spectroscopy & Radiative Transfer,* 2001, vol. 68, 299-317
- Diode Lasers and Applications. *Proceedings of SPIE,* 2002, vol. 4817, 73-81
- **BOMSE et al.** *Early fire sensing using near IR-diode laser spectroscopy*